# EUROPEAN PATENT SPECIFICATION

(11) **EP 1 494 556 B1**
(45) Date of publication and mention of the grant of the patent: **22.04.2015**
(21) Application number: 03742766.3
(22) Date of filing: 14.02.2003
(51) Int. Cl.: A47G 25/14, A47G 25/48

(54) **IMPROVED PINCH GRIP HANGERS**
VERBESSERTE KNEIFGRIFFBÜGEL
CINTRES A PINCE AMELIORES

(30) Priority: 15.02.2002 US 76790; 12.11.2002 US 292128
(43) Date of publication of application: 12.01.2005
(60) Divisional application: 15151413.0
(73) Proprietor: Gouldson, Stanley F., Northport, NY 11768 (US); Olk, Olaf, Hauppauge, NY 11788 (US); Sollanek, Jeffrey, R., Asheville, NC 28806 (US)
(72) Inventor: Gouldson, Stanley F., Northport, NY 11768 (US); Olk, Olaf, Hauppauge, NY 11788 (US); Sollanek, Jeffrey, R., Asheville, NC 28806 (US)
(74) Representative: Körber, Martin Hans
(86) International application number: PCT/US2003/004562
(87) International publication number: WO 2003/070067

(56) References cited:
- WO-A1-99/60899
- US-A- 3 946 915
- US-A- 4 009 807
- US-A- 6 019 261
- US-A- 6 021 933
- US-A- 6 105 836
- US-A- 6 158 635
- US-B1- 6 422 438

## Description

### Field of the Invention

The present invention relates generally to a pinch grip hanger, and more particularly pertains to a nestable pinch grip hanger used for hanging pants and skirts for shipment to retailers and display of the same in a retail environment.

### Background of the Invention

Consumer taste and fashion have dictated a desire for mass-produced, but well-fitted garments, which are distributed and sold throughout the United States. Large national retailers of clothing generally contract with a plurality of clothing manufacturers to produce uniform standardized clothing, which is essentially identical from batch to batch, even though manufactured by different entities. These manufacturers in turn produce the clothing at their own plants, or in many cases, subcontract the production of the garments to manufacturers based in the Far East, for instance, in Hong Kong, Taiwan, Singapore and South Korea.

In the retail clothing industry clothing is typically suspended from hangers at the point of purchase. Such hangers are often inexpensive ship-on types and under prevailing garment-on-hanger programs, the garment is shipped from the manufacturer to the retailer while suspended from a hanger. Traditional garment-on-hanger pant and skirt hangers used spring clips that were manually pushed into a locking position to secure the pants or skirts to the hanger. In these hangers, a steel retaining clip was manually clamped over a clam shell garment grip to secure the garment. Use of the hangers in this device required a manual operation to slide the steel clip over the clam shell to close the retention clip on the garment.

However, these hangers were not popular as the physical force needed to close a hanger on a thick waist band could result in increased time and labor costs to load the hanger and complaints of inadvertently broken finger nails were common. For these reasons, pinch grip hangers have become popular in recent years. However, pinch grip hangers generally have greater depth than clip hangers, resulting in fewer garments per rod or per loop when shipping the garments, and a tendency to inadvertently drop the garments when subjected to unexpected shipping loads, as adjacent hangers impact one another and open one or more of the pinch grips. Inadvertent opening of the pinch grips can also occur in a retail store environment, as customers push the garments to one side to better view a garment of interest. Various guards have been proposed in the prior art to prevent the inadvertent opening of the pinch grips, but these guards also contribute to increased depth for the product.

### Discussion of the Prior Art

U.S. Patent 3,946,915, illustrates a prior art hanger with the fixed jaw of a pinch grip hanger offset to the rear of the hanger support bar, and a guard member extending outwardly to protect the moveable jaw when the hangers are pressed together. The design of the pinch grip utilized in this device results in a relatively thick hanger with a modest jaw opening.

Patents 6,019,261 and 6,021,933 are typical of more recent nestable hanger designs that incorporate a guard to prevent the inadvertent opening of pinch grips during shipment. In these designs, the pinch grip with a fixed and a moveable jaw is used, with the fixed jaw integrally molded with the hanger support bar. One or more guard members then extend outwardly from the support bar to protect the moveable jaw from inadvertent actuation. While these designs achieve their intended effect, they are relatively thick, reducing the number of hangers that can be shipped on any given support bar. Further, as a result of the pinch grip design utilized, the maximum opening of the pinch grip is limited.

U.S. Patent 4,009,807 is a prior art pinch grip hanger having the pinch grip offset from the center line of the support bar of the hanger. However, in this design, pressing two adjacent hangers together would result in opening the pinch grip, and release of the garment.

U.S. Patents 5,516,014 and 5,785,216 disclose the use of a thermoplastic rubber, sold under the name Kraton, by Shell Oil Company. The thermoplastic rubber provides a non-slip grip for the hanger.

The above prior art pinch grip hangers use metal springs with a relatively constant spring rate, which means the pinch grip requires progressively greater force to open as the jaws are opened, i.e., the further the jaws are opened, the greater the bias loading exerted by the spring. This makes it difficult to fully open the jaws of some of these hangers when it is necessary to insert a relatively thick waistband.

These prior art pinch grip hangers are loaded manually, since both pinch grips are normally biased to a closed position by a spring and both must be opened to load a garment into the grips. At the present time this requires an operator to perform four steps. Using one hand the operator must open the first pinch grip and then using the other hand to suspend the garment, one side of the garment is placed in the grip. This process is then repeated for the other pinch grip. With the second pinch grip the operator must also simultaneously tension the garment between the clips, and since both hands are already occupied, the tensioning step may require additional manual movements. At a minimum, four manual steps or movements are required for each garment that is loaded, resulting in relatively high labor costs for loading the garments.

These prior art hangers are difficult to automate as they are not designed to stack load in a magazine, and they frequently have a single pair of projecting high points which causes the hangers to not stack evenly in a magazine. Further, the high points can result in the hanger snagging on the next to be fed hanger in an automated feed mechanism.
WO 99/60899 discloses a coat hanger with a movable hock portion, which can be transported in a stack with a plurality of coat hangers

### Summary of the Invention

The present invention provides a pinch-grip hanger having a novel beam construction having a nesting configuration and capable of nesting in a stack of pinch-grip hangers.

The present invention also provides a nestable pinch-grip hanger capable of nesting in a stack of pinch-grip hangers to reduce the cube and shipping costs associated with the shipment of pinch-grip type hangers.

The present invention further provides a nestable pinch-grip hanger capable of nesting in a stack of pinch-grip hangers which can be accommodated in a magazine of an automated production machine for feeding the pinch-grip hangers from the stack into the production machine for further processing therein. Accordingly, a nestable hanger according to claim 1 is provided. Advantageous solutions are presented in the dependent claims.

### Brief Description of the Drawings

Figure 1A illustrates the back view of a preferred implementation of the improved pinch grip hanger of Figure 1, having an altered or indented hanger beam and a integrally molded hook member adapted to receive a side size indicator.
Figure 1B illustrates a top view of the improved and nestable pinch-grip hanger of Figure 1A.
Figure 1C illustrates a partial isometric view of the nestable pinch-grip hanger of Figure 1A.
Figure 4C illustrates a partial isometric view of one of the improved pinch-grips, using gripping teeth in lieu of gripping pads illustrated in Figures 4A and 4B.
Figure 4D illustrates a sectional view of the pinch grip of Figure 4C as taken along line 4-4 in Figure 4C.
Figure 7A illustrates a front view of a stack of the embodiment of nestable hangers illustrated in Figure 1A.
Figure 8A illustrates a side view of the pinch grips of the stack of nestable hangers of Figure 7A.
Figure 8B illustrates a sectional view of the stack of nestable hangers of Figure 7A as taken along line 8B - 8B in Figure 7A.
Figure 8C illustrates a partial isometric view of the hooks and support beams of the stack of nestable hangers of Figure 7A.
Figure 9A illustrates a top view of a shipping container having a plurality of the stacks of nestable hangers of Figure 7A.
Figure 9B illustrates an isometric view of the shipping container of Figure 9A having a cut-away portion showing the stacks of nestable hangers therein.

### Detailed Description of the Present Invention

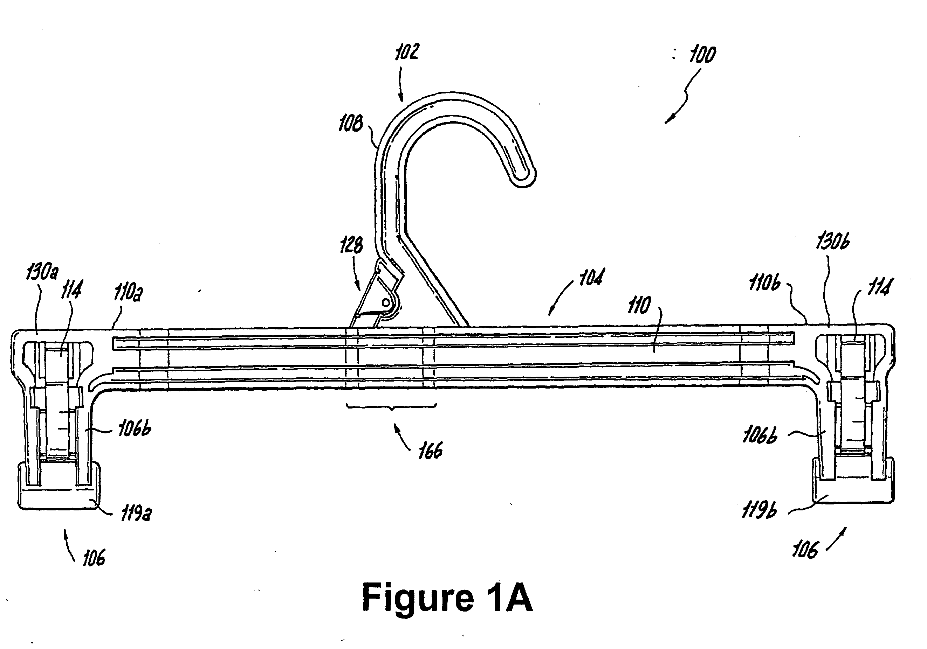

The improved pinch grip hanger of the present invention is illustrated in plan view in Figure 1A.

Figure 1A is a plan view of the back side of an embodiment 100 of the hanger having a plastic hook with a mounting for side sizers, and an indent in the beam thereof for nesting the hangers, as will be hereinafter described.

The improved pinch grip hanger 100 is molded of plastic with a center support bar 105 and an upwardly extending hook member 108. As illustrated in Figure 1A, the hook member 108 is formed of plastic and integrally molded with the support bars 105 and 110.

As illustrated in Figure 1A, the present invention may also be fitted with at pivoting flange 128 to receive a side sizer in the matter taught in U.S. Patent No. 6,260,745, also assigned to the assignee of the present invention.

### Pinch Grip Construction

Each of the pinch grips 106 include a first and second pinch grip jaws with the first jaw members 106b being integrally molded to hanger beam 110 as illustrated in Figure 1A. As noted above, and as will be hereinafter discussed in greater detail, the integrally molded fixed jaw members are offset from the center axis of support bar 110 with offset mounting portions 11a,b; 11a,b; 211a,b and 311a,b that enable the fixed jaws to be mounted behind the rear plane of the central support bar 110. The second jaw members 106a in Figure 1A are pivotally secured to the first jaw members at a pivot mounting, by spring members 14, 114, 214 and 314as will be hereinafter discussed in detail.

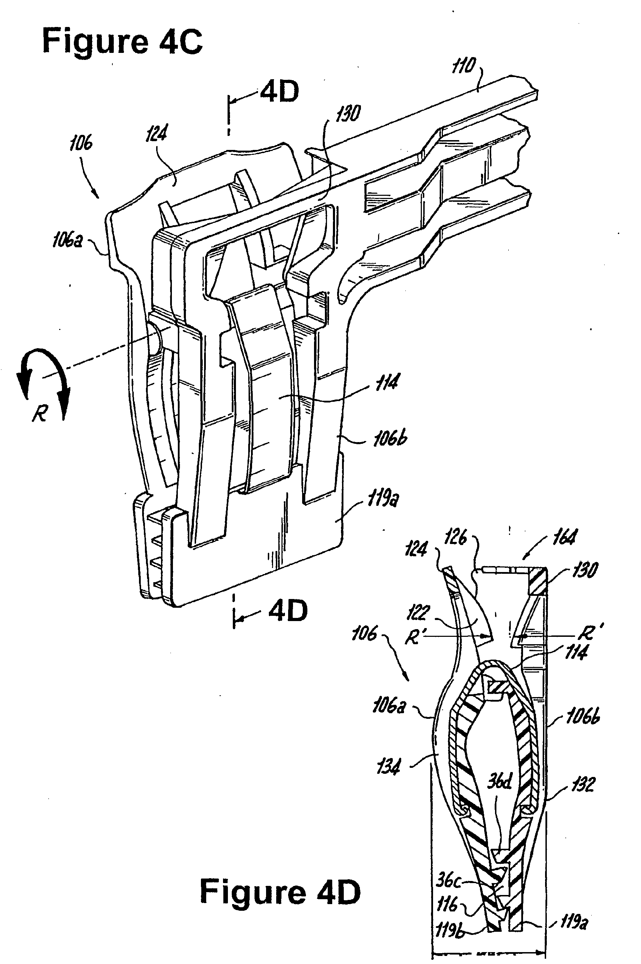

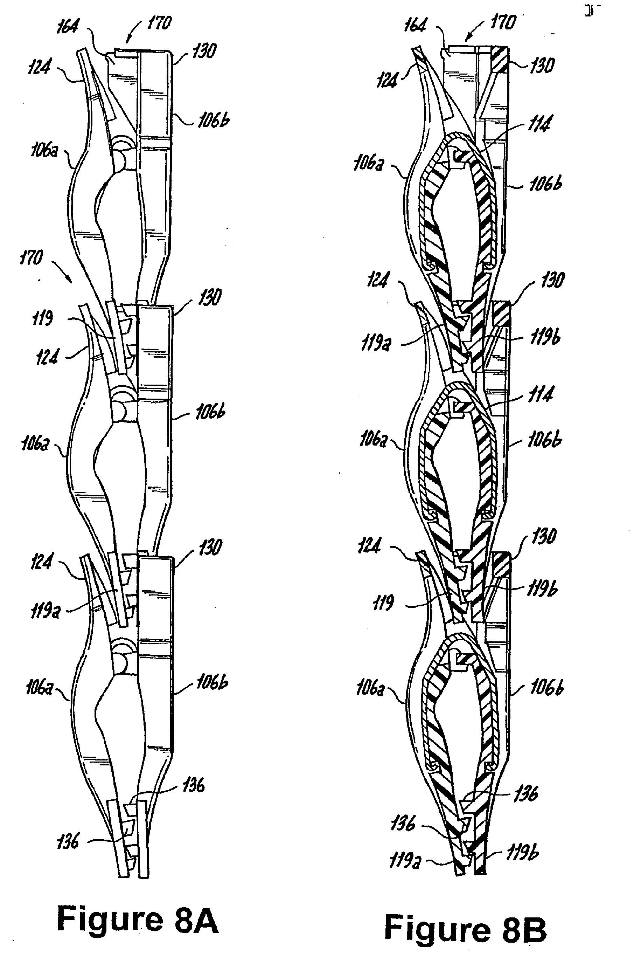

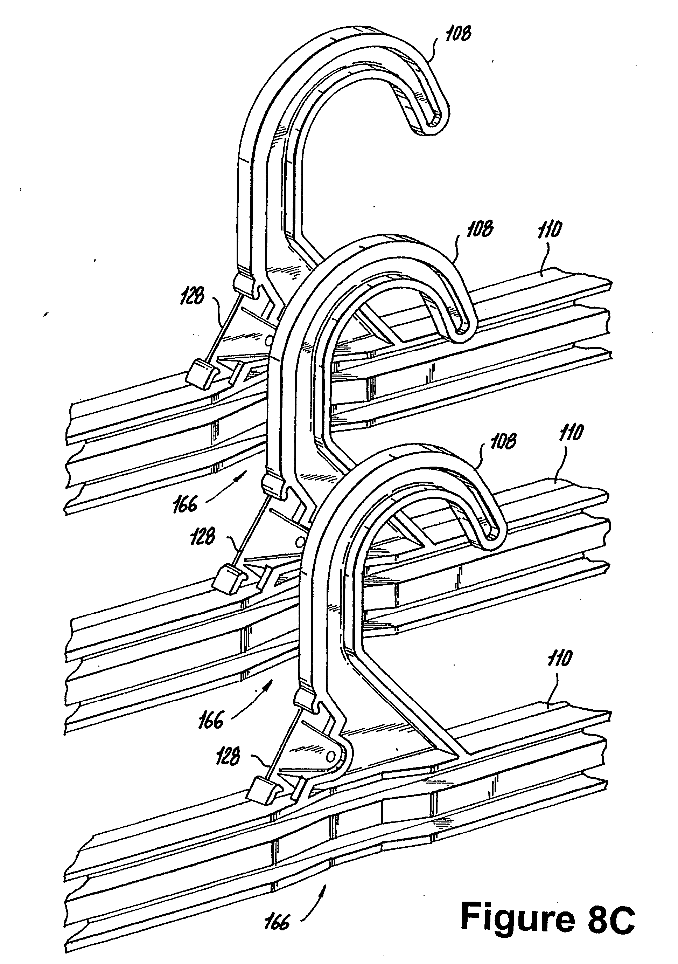

The construction of the pinch grips is more fully illustrated in Figures 4C-4D. Figures 4C-4D and Figures 8A-8B describe a nesting embodiment.

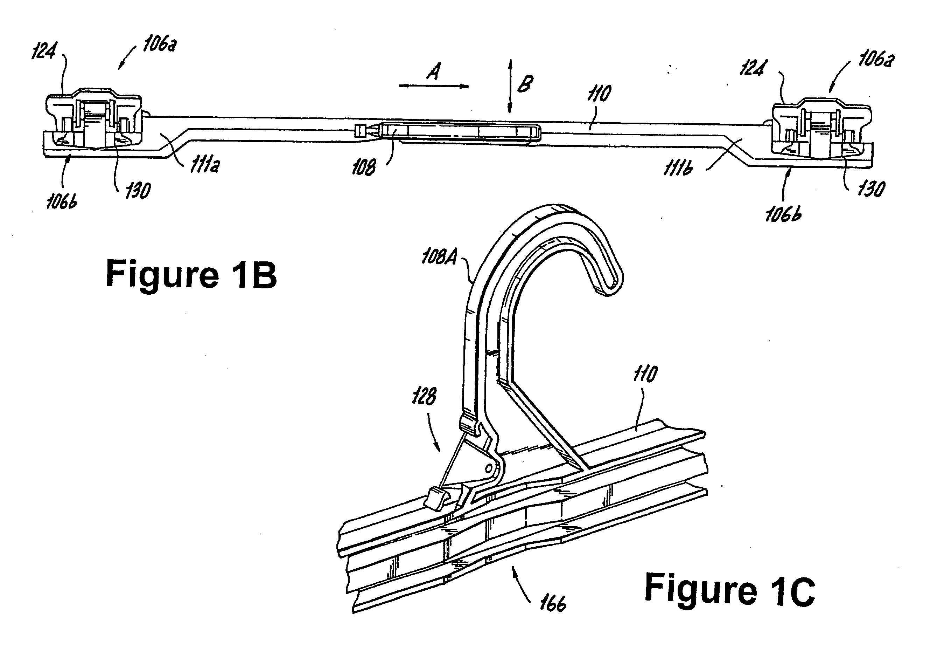

The first pinch-grip jaw 106b is offset from the center axis of the center support bar 110 by means of the offset mounting portion 111a,b in Figure 1B. The use of the offset mounting significantly reduces the overall thickness of the hanger, enabling greater density of hangers in shipment.

The rear wall 130b of the fixed pinch grip and the user actuation portion 124 of the moveable grip together form an actuatable end 170 for each pinch grip to enable a user to open the pinch ends of the pinch grip to receive a garment. The actuatable end 170 also defines a pocket 164 for receiving the pinch end in a nesting environment, as will be hereinafter explained in more detail.

### The Nesting Pinch Grips

As will be described below, the hanger illustrated in Figure 1A includes nesting means for nesting the hanger in a stack of similar hangers such that the hanger interlocks with the stack of similar hangers. For purposes of this disclosure, "interlocks" means that the relative motion between hangers in the stack is restricted by some degree. Although, the degree of restriction may require an applied force to separate the hangers from one another, such an applied force is not necessary. For example, in the preferred implementation discussed below, the nestable hangers in the stack can be separated easily from one another, however, each hanger is shaped and/or configured to "fit" or nest with at least one other hanger in the stack analogous to the nesting of outdoor resin chairs. Furthermore, the nestable hanger preferably nests in a plane substantially parallel with a plane of the stack of similar hangers and more preferably in substantially a same plane as the stack of similar hangers. For the purpose of this disclosure, nesting of a hanger in a plane substantially parallel with a plane of the stack of similar hangers where the planes are not the same plane will be referred to as vertical nesting, while nesting of a hanger in a plane substantially parallel with a plane of the stack of similar hangers where the planes are the same plane will be referred to as horizontal nesting. Although, the nestable hanger is described and shown herein in a horizontal nesting configuration, such is done by way of example only and not to limit the spirit or scope of the present invention.

In the hanger of Figure 1A, the support means is an upwardly extended hook member 108 formed of plastic and integrally molded with the body 104. The embodiment can be formed with or without provisions to accept a size indicator. The hook members 108 can be formed to accept either top sizers or side sizers. For example, when top sizing is desired, the hook 108 includes an upstanding flange member 120 that is adapted to receive a top size indicia for a characteristic of the garment suspended in the hanger, such as a size indicator permanently affixed to the hook member 108 as taught by U.S. Patent No. 5,604,975 or the size indicator releasably secured to the hook member 108 as taught by U.S. Patent No. 5,794,363. Both of these patents are assigned to the assignee of the present invention.

As discussed more fully below and illustrated in Figures 1A the present invention may also be fitted with a pivoting flange to receive a side sizer in the manner taught in U.S. Patent No. 6,260,745, also assigned to the assignee of the present invention. Preferably, such a side sizer is disposed on a web portion 128 between the hook member 108 and the body 104 of the hanger 100. Side sizers may also be fitted to wire hook hangers by attaching the web portion 128 to the body and the hook mount 208a, 308a, as taught in U.S. 2005/0155387 A1, filed February 15, 2002.

As illustrated in Figures 1A-1C, the body 104 of the pinch grip hanger is a horizontally extending support bar 110. The support bar 110 includes the pinch grips 106 positioned on either end 110a,b of the support bar 110. Although many different shape cross-sections are possible, the central support bar 110 is preferably formed with a curved web I-beam cross section, or a square M-shaped cross-section illustrated at Figure 1A. Each of these cross sectional configurations provide exceptional strength along the vertical axis of the hanger. Each of the pinch grips 106 include first and second pinch grip jaws 106a,b with the fixed jaw members 106b being integrally molded with the hanger body 104. The second jaw members 106a are pivotally secured to the first jaw members 106b at a pivot mounting, by a spring member 114. Each of the pinch grip jaws 106a,b defme garment-engaging areas 116. Each of the moveable jaw members also have a user actuation end 124 that is used to open the pinch grips and pinch ends 119a,b. The rear wall 130b of the fixed pinch grip and the user actuation portion 124 of the moveable jaw members together form an actuatable end 170 for each pinch grip to enable a user to open the pinch ends of the pinch grip to receive a garment. Each of the first and second jaw members 106a,b may be molded with teeth 136. These teeth 120 may be staggered so that they do not directly oppose each other. Alternatively, each of the first and second jaw members 106a,b may be fitted with a molded non-slip pad as previously described.

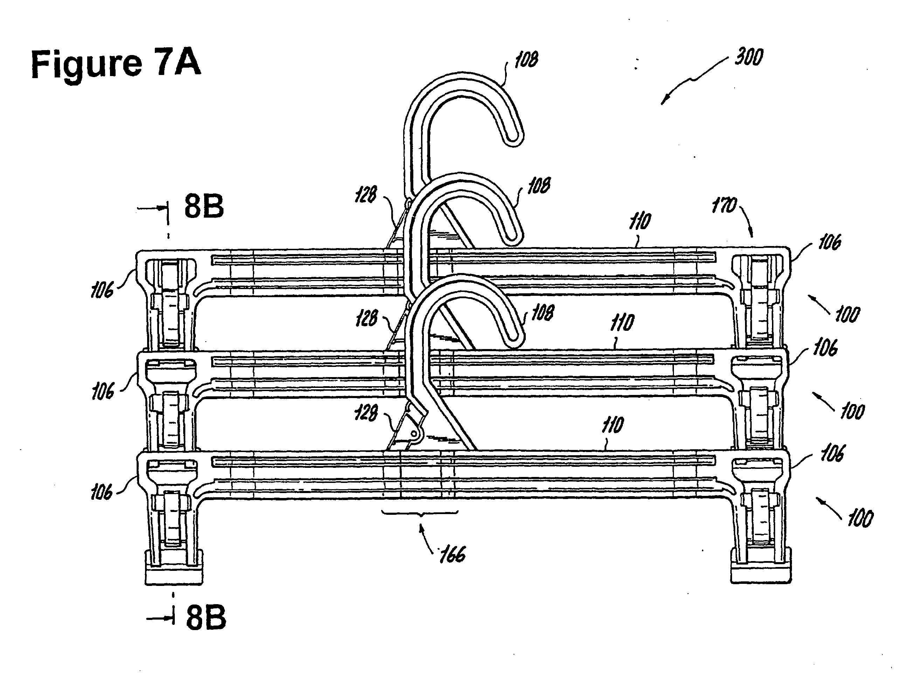

Referring now to Figure 7A there is shown a stack of hangers 100 generally referred to by reference numeral 300. As discussed above, although the hangers 100 can be nested in either a horizontal or vertical nesting configuration, the horizontal configuration is shown by way of example only and not to limit the scope of the present invention. Furthermore, although the nests 300 of hangers 100 are shown with three individual hangers 100 in the nest 300, those skilled in the art will appreciate that any number of individual hangers 100 greater than two can be nested. Still further, the nesting of hangers 100 will be described and shown in Figures 8A and 8B with more specificity with regard to hangers 100.

Referring now to Figures 8A and 8B, the nesting means can comprise the space between the actuatable ends 170 defined by user engagement portions 124 and the rear portion 130 of the pinch grip, which together define a pocket 164 having a shape and size larger than a size and shape of the pinch ends 119 such that the pinch ends 119a,b are received within a corresponding pocket 164 of the hanger immediately therebelow in the stack of hangers 300. The pockets 164 are formed between the angled slope of the rear wall members 130 and the oppositely angled slope of the stiffening ribs of user actuation ends 124 which together form a V-shaped guide to center the pinch ends 119 therebetween. The pinch ends 119a,b are dimensioned to be closely, but not tightly received in the space R-R' illustrated in Figure 4D in order to provide a stable stacks of nesting hangers 300. However, those skilled in the art will appreciate that the pinch ends 119a,b do not positively lock into the pocket 164, such as by a press fit or otherwise, it being sufficient that the pinch ends 119a,b be loosely secured in the pockets 164.

Referring now to Figure 1B, the nesting means can also comprise alone or in addition to that described above, the pinch grips 106 being equidistant from the hook 108 on opposite ends of the body 104 in a first direction (indicated by arrow A) and the pinch grips 106 further being offset in a second direction (indicated by arrow B) orthogonal to the first direction by an amount equal to a thickness of at least a portion of a corresponding hook member 108 in the stack of individual similar hangers 300. Preferably the amount of offset in the direction of arrow B is substantially equal to the thickness of the corresponding hook member 108. As shown in Figure 7A, the offset facilitates nesting of the hangers 100 in a horizontal stacking configuration.

Referring now to Figures 1C, 7A and 8C where the support means comprises the integrally formed plastic hook member 108, the nesting means can also include in combination with that described above, the body 104 having a cut-out portion 166 corresponding to at least a portion of the hook member 108 on the stack of similar hangers 300. Such a cut-out portion will also accommodate the hook member in a stack of similar hangers while nested together in the stack.

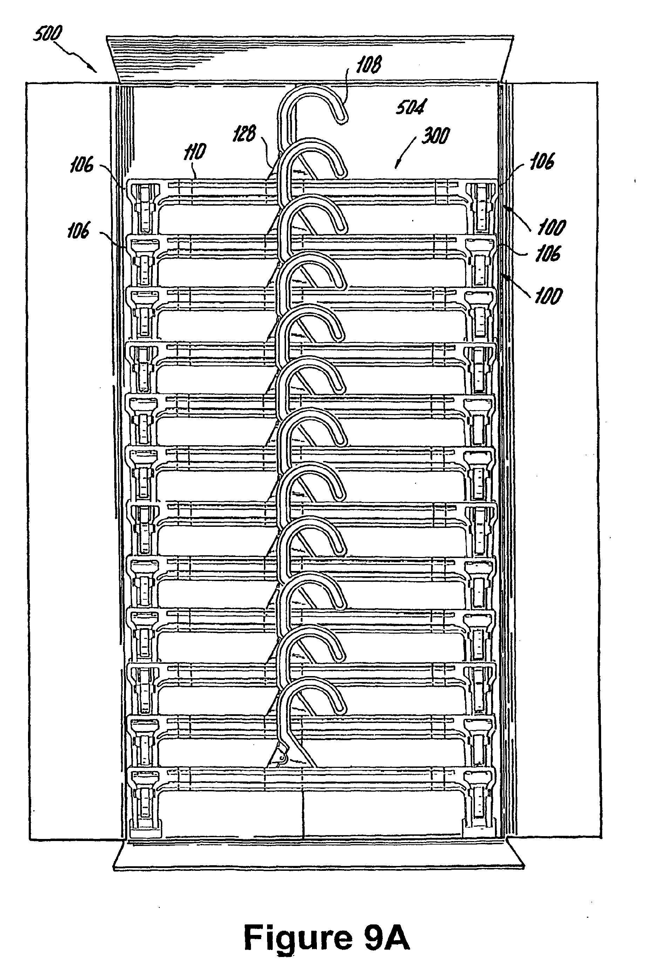

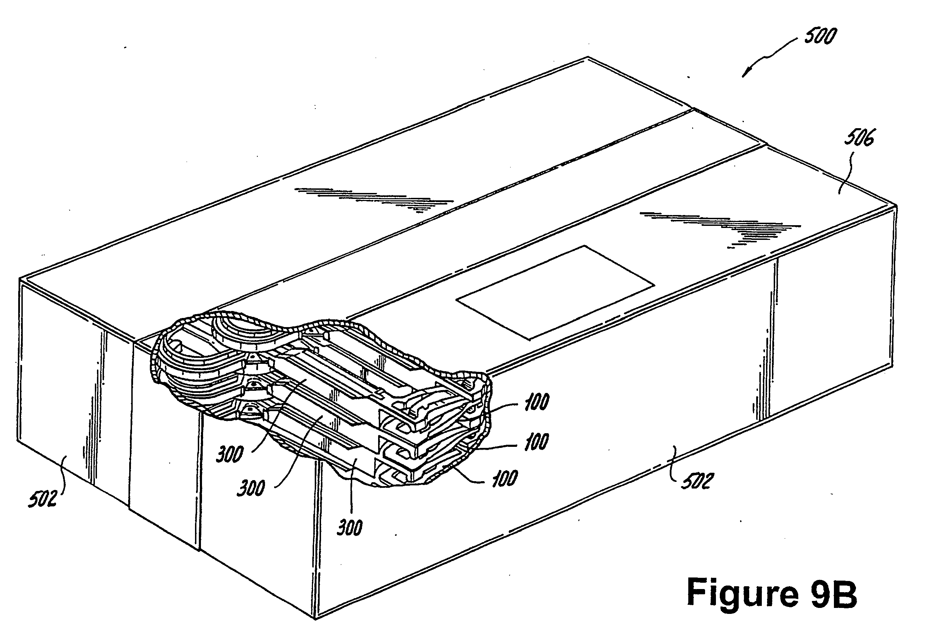

Referring now to Figures 9A and 9B, therein is illustrated a container of hangers, the container being generally referred to by reference numeral 500. The container is shown having hangers 100 disposed therein. Generally, the container 500 is a shipping container and has walls 502 (including a bottom) defining an interior 504. The container can have a top 506 or be open at the top. Furthermore, the container 500 can be fabricated from numerous materials known in the art for shipping containers, such as cardboard, or plastic. A plurality of stacks of hangers 300 are disposed in the interior 504 where each of the individual stacks of hangers 300 comprise a plurality of nestable hangers 100 as described above. Although, the stacks of hangers 300 are shown having 12 individual hangers 100 in a horizontal nesting configuration, those skilled in the art will appreciate that any number of individual hangers greater than one in either a horizontal or vertical nesting configuration may be disposed in the container 500. Furthermore, although the container 500 is shown having several stacks of hangers 300 disposed therein, those skilled in the art will appreciate that any number of stacks of hangers 300 greater than one can be disposed in the container 500.

Those skilled in the art will appreciate that the novel nesting hangers 100 and nesting stacks thereof 300 provide for greater shipping density than would be possible with pinch-grip hangers of the prior art which are loosely packaged in containers. Those skilled in the art will also appreciate that the reduced depth of the hangers of the present invention will also enable a greater number of layers or nesting stacks 300 of hangers for any given depth of container. The reduced width also provide for greater display density when garments are secured thereon and the hangers are hung to form a display. Furthermore, the means for preventing inadvertent actuation discussed above, provides means for inadvertent actuation of the pinch grips 106 when a garment is retained by the pinch grips 106 when the hangers are being transported with the garments retained thereon.

## Claims

1. A nestable hanger (100) comprising:
a support means for supportably hanging the hanger (100) on a display;
a body (104) supported by the support means and having two pinch grips (90a, 90b) disposed thereon for retaining a garment therein; and
nesting means for nesting the hanger in a stack of similar hangers such that the hanger nests within a similar hanger (300) in the stack of similar hangers, wherein the nesting means comprises:
the support means comprises a hook; and
the two pinch grips (90a, 90b) being equidistant from the hook (108) on opposite ends of the body in a first direction, the pinch grips (90a, 90b) further being offset in a second direction orthogonal to the first direction by an amount equal to a thickness of at least a portion of a corresponding hook (108) in the stack of similar hangers and wherein the nesting means further comprises:
the body having a cut-out portion (166) corresponding to at least a portion of a hook (108) on the stack of similar hangers (300) to accommodate the hook in the stack of similar hangers while nested together in the stack.

2. The nestable hanger of claim 1, wherein the nesting means comprises the pinch grips (90a, 90b) each having first and second jaws, the first jaw being disposed on the body and the second jaw being pivotally disposed with respect to the first jaw about an axis of rotation, each of the first and second jaws having a pinch end (119) and an actuatable end (170), the pinch ends (119ab) being biased together and being actuated apart by an actuation force applied at the actuation ends (124), the actuatable ends (170) defining a pocket (164) having a shape and size larger than a size and shape of the pinch ends (119ab) such that the pinch ends (119ab) are accommodated into a corresponding pocket (164) of the similar hangers (300) in the stack of hangers.

3. The nestable hanger of claim 2, further comprising means for preventing inadvertent actuation of the pinch ends (119a,b) while the garment is inserted between the pinch ends (119a,b).

4. The nestable hanger of claim 3, wherein the means for preventing inadvertent actuation of the pinch ends (119a,b) comprises at least one guard member (26) disposed on the actuation end (124) of the first jaw (106b), the at least one guard member (26) projecting outwardly from the first jaw (106b) toward the actuation end (124) of the second jaw (106a) such that an inadvertent actuation force is at least partially blocked from being applied to the actuation end (124) of the second jaw (106a).

5. The nestable hanger of claim 3, wherein the means for preventing inadvertent actuation of the pinch ends comprises at least one of the first and second jaws having a shape such that a widest portion of the pinch grip in a direction orthogonal to the axis of rotation is below the axis of rotation.

## Patentansprüche

1. Verschachtelbarer Aufhänger (100), der umfasst:
eine Lagereinrichtung zum lagerbaren Aufhängen des Aufhängers (100) auf einer Auslage;
einen Körper (104), der durch die Lagereinrichtung gelagert ist und zwei Klemmgriffe (90a, 90b) hat, die darauf angeordnet sind, um ein Kleidungsstück darin zu halten; und
eine Verschachtelungseinrichtung zum Verschachteln des Aufhängers in einem Stapel ähnlicher Aufhänger, so dass der Aufhänger innerhalb eines ähnlichen Aufhängers (300) im Stapel ähnlicher Aufhänger ruht, wobei die Verschachtelungseinrichtung umfasst:
die Lagereinrichtung, die einen Haken aufweist; und
wobei die beiden Klemmgriffe (90a, 90b) gleichmäßig vom Haken (108) auf abgewandten Enden des Körpers in einer ersten Richtung beabstandet sind, wobei die Klemmgriffe (90a, 90b) außerdem in einer zweiten Richtung orthogonal zur ersten Richtung um einen Betrag gleich einer Dicke von zumindest einem Bereich eines entsprechenden Hakens (108) im Stapel ähnlicher Aufhänger versetzt sind und wobei die Verschachtelungseinrichtung außerdem umfasst:
den Körper, der einen Ausschnittbereich (166) hat, der zumindest einem Bereich eines Hakens (108) auf dem Stapel ähnlicher Aufhänger (300) entspricht, um den Haken im Stapel ähnlicher Aufhänger unterzubringen, während sie zusammen im Stapel ruhen.

2. Verschachtelbarer Aufhänger nach Anspruch 1, wobei die Verschachtelungseinrichtung die Klemmgriffe (90a, 90b) umfasst, die jeweils eine erste und zweite Klemmbacke haben, wobei die erste Klemmbacke auf dem Körper angeordnet ist und die zweite Klemmbacke in Bezug auf die erste Klemmbacke um eine Drehachse drehbar angeordnet ist, wobei jede von der ersten und zweiten Klemmbacke ein Klemmende (119) und ein betätigbares Ende (170) hat, wobei die Klemmenden (119ab) zueinander vorgespannt sind und durch eine Betätigungskraft voneinander weg betätigt werden, welche an die Betätigungsenden (124) angelegt wird, wobei die betätigbaren Enden (170) eine Tasche begrenzen, welche eine Form und Größe hat, die größer ist als eine Größe und Form der Klemmenden (119ab), so dass die Klemmenden (119ab) in einer entsprechenden Tasche (164) von den ähnlichen Aufhängern (300) im Stapel von Aufhängern untergebracht sind.

3. Verschachtelbarer Aufhänger nach Anspruch 2, der außerdem eine Einrichtung umfasst, um unabsichtliche Betätigung der Klemmenden (119ab) zu verhindern, während das Kleidungsstück zwischen die Klemmenden (119ab) eingeführt ist.

4. Verschachtelbarer Aufhänger nach Anspruch 3, wobei die Einrichtung zum Verhindern unbeabsichtigter Betätigung der Klemmenden (119ab) zumindest ein Sicherungsteil (26) umfasst, welches auf einem Betätigungsende (124) der ersten Klemmbacke (106b) angeordnet ist, wobei das zumindest eine Sicherungsteil (26) von der ersten Klemmbacke (106b) in Richtung auf das Betätigungsende (124) der zweiten Klemmbacke (106a) nach außen ragt, so dass eine unbeabsichtigte Betätigungskraft zumindest teilweise blockiert ist, an das Betätigungsende (124) der zweiten Klemmbacke (106a) angelegt zu werden.

5. Verschachtelbarer Aufhänger nach Anspruch 3, wobei die Einrichtung zum Verhindern unbeabsichtigter Betätigung der Klemmenden zumindest eine von der ersten und der zweiten Klemmbacke aufweist, die eine solche Form hat, dass ein breitestes Teil des Klemmgriffs in einer Richtung orthogonal zur Drehachse unterhalb der Drehachse liegt.

## Revendications

1. Cintre emboîtable (100) comprenant :
un moyen de support pour suspendre de manière supportée, le cintre (100) sur un présentoir ;
un corps (104) supporté par le moyen de support et ayant deux pinces (90a, 90b) disposées sur ce dernier pour retenir un vêtement à l'intérieur de celles-ci ;
un moyen d'emboîtement pour emboîter le cintre dans une pile de cintres similaires de sorte que le cintre s'emboîte dans un cintre similaire (300) dans la pile de cintres similaires, dans lequel le moyen d'emboîtement comprend :
le moyen de support qui comprend un crochet ; et
les deux pinces (90a, 90b) qui sont équidistantes du crochet (108) sur les extrémités opposées du corps dans une première direction, les pinces (90a, 90b) étant en outre décalées dans une seconde direction orthogonale à la première direction, selon une quantité égale à une épaisseur d'au moins une partie d'un crochet (108) correspondant dans la pile de cintres similaires, et dans lequel le moyen d'emboîtement comprend en outre :
un corps ayant une partie découpée (166) correspondant à au moins une partie du crochet (108) sur la pile de cintres similaires (300) pour loger le crochet dans la pile de cintres similaires tout en étant emboîtés ensemble dans la pile.

2. Cintre emboîtable selon la revendication 1, dans lequel le moyen d'emboîtement comprend les pinces (90a, 90b) ayant chacune des première et seconde mâchoires, la première mâchoire étant disposée sur le corps et la seconde mâchoire étant disposée de manière pivotante par rapport à la première mâchoire autour d'un axe de rotation, chacune des première et seconde mâchoires ayant une extrémité de pince (119) et une extrémité actionnable (170), les extrémités de pince (119ab) étant sollicitées ensemble et étant actionnées séparément par une force d'actionnement appliquée sur les extrémités d'actionnement (124), les extrémités actionnables (170) définissant une poche (164) ayant une forme et une taille supérieures à une taille et une forme des extrémités de pince (119ab) de sorte que les extrémités de pince (119ab) sont logées dans une poche (164) correspondante des cintres similaires (300) dans la pile de cintres.

3. Cintre emboîtable selon la revendication 2, comprenant en outre un moyen pour empêcher l'actionnement par inadvertance des extrémités de pince (119a, b) alors que le vêtement est inséré entre les extrémités de pince (119a, b).

4. Cintre emboîtable selon la revendication 3, dans lequel le moyen pour empêcher l'actionnement par inadvertance des extrémités de pince (119a, b) comprend au moins un élément de protection (26) disposé sur l'extrémité d'actionnement (124) de la première mâchoire (106b), le au moins un élément de protection (26) faisant saillie vers l'extérieur à partir de la première mâchoire (106b) vers l'extrémité d'actionnement (124) de la seconde mâchoire (106a) de sorte que l'application d'une force d'actionnement accidentelle sur l'extrémité d'actionnement (124) de la seconde mâchoire (106a) est au moins partiellement empêchée.

5. Cintre emboîtable selon la revendication 3, dans lequel le moyen pour empêcher l'actionnement par inadvertance des extrémités de pince comprend au moins l'une des première et seconde mâchoires ayant une forme telle que la partie la plus large de la pince dans une direction orthogonale à l'axe de rotation est au-dessous de l'axe de rotation.
